# EUROPEAN PATENT SPECIFICATION

(11) **EP 1 606 086 B1**
(45) Date of publication and mention of the grant of the patent: **05.05.2010**
(21) Application number: 04722511.5
(22) Date of filing: 23.03.2004
(51) Int. Cl.: B27B 19/00, B23D 51/08

(54) **A CONSTRUCTIVE ARRANGEMENT IN A SAW**
KONSTRUKTIONSANORDNUNG IN EINER SÄGE
STRUCTURE D'UNE SCIE

(30) Priority: 24.03.2003 BR 8301911 U
(43) Date of publication of application: 21.12.2005
(73) Proprietor: Starrett Industria e Comercio Ltda, Bairro do Pinheirinho 13306-900, Sao Paulo (BR); Camargo Jumior, Salvador, 13306-351 IT (BR)
(72) Inventor: CAMARGO JUMIOR, Salvador, 13306-351 Itú (BR)
(74) Representative: Gray, John James
(86) International application number: PCT/BR2004/000038
(87) International publication number: WO 2004/085123

(56) References cited:
- EP-A1- 1 236 530
- US-A1- 2003 110 918

## Description

The present application is directed to a constructive arrangement in a saw, more specifically a jig type saw, said novel constructive arrangement precisely comprising the saw end that attaches same to the respective machine for actuating or operating the saw.

As is known by those skilled in the art, there are plenty of different types and trademarks of sawing devices in the market, including laminar saws known as "jigsaws", characterized by being replaceable parts after they are worn out or broken.
Every model or trademark of the existing sawing devices presents a distinct particular attachment system, thus forcing the user to acquire cutting saws provided with their attachment end consistent with the coupling or fitting system of the device.

US 2003/0110918 discloses a compass saw comprising a motor-driven reciprocating rod with a tool receptacle disposed at its free end for receiving the clamping shaft of a saw blade, a receiving hole and a centre bolt that is pre-stressed towards the receiving hole, being guided transversely to the reciprocating rod and displaceable in a longitudinal direction. The centre bolt comprises a centring means configured as a flat bearing surface. The bearing surface cuts the longitudinal axis of the reciprocating rod into a slant angle. EP 1236530 describes a blade clamping device which facilitates accurate and reliable positioning of the blade replacement position using relatively simple structures.

Although this condition presents at first a certain protectionism that favors the manufacturers of machines by specifying or associating the replaceable saw with the sawing device, it brings about a number of inconveniences at a later time, for it also creates an extensive dependence of the machine on the cutting tool.

One of these inconveniences is the fact that in the event there is a shortage of cutting tools in the replacement market, the sawing device becomes idle, a situation that causes problems to the user.

Another inconvenience is the fact that the user, when buying the sawing blades, must have in mind the exact type and model of machine he owns in order to buy the compatible saw, what does not occur all the time.

Another inconvenience of this diversity of models of machines and respective sawing blades is the fact that the salesman have must keep a spare supply in his store for every model and type of saw, thus requiring further space and storing cost and investment in goods, with respect to a good whose rotation cannot be predictable.

Another inconvenience of said diversity of saws is the fact that the manufacturer must keep a regulating supply, a production line and machinery for producing every type and/or model of sawing blades that are compatible with the innumerable types and models of the existing sawing devices.

Therefore one of the objects of the present invention is to provide a constructive arrangement in a saw that eliminates the possibility of a shortage of the cutting in the replacement market and, consequently, it prevents the eventual idleness of the sawing device.

Another object of the present invention is to provide a constructive arrangement in a saw that it does require the user to know precisely the type and model of machine he owns so that he can buy a type of compatible saw.

Another object of the present invention is to provide a constructive arrangement in a saw that does not require the salesman to keep a replacement supply in his store for every model and type of saw.

Another object of the present invention is to provide a constructive arrangement in a saw that does not require the manufacturer to keep: a regulating stock, a line of production and machinery for producing every type and/or model of sawing blades that are compatible with the innumerable types and models of sawing devices that the manufacturer himself sells.

In a first aspect of the invention there is provided a saw blade for use with a plurality of sawing devices having a compatible standardised length and comprising a thin laminar cutting portion and a coupling end, said thin laminar portion having a serrated or indented profile being defined on its working edge that configures a cutting blade, wherein said coupling end of the blade comprises a "V" shaped edge centred on the blade's axis, small transversal thin tabs incorporated on the side edges of said laminar portion, and a through-hole that is centred and aligned with the longitudinal axis of said blade, **characterized in that** said through hole is disposed equidistant from said "V" shaped axial edge and said tabs defining recesses in the respective upper and lower side edges between said tab and said cutting portion, therefore configuring a neck that prevents the coupling end from coupling with the cutting portion of said saw blade itself.

Further optional features and embodiments are as disclosed in the appended claims.

The present invention will be described below with reference to the accompanying drawings, in which:
Figure 1 shows a plan view of the inventive saw arrangement;
Figure 2 shows a perspective detailed view of the coupling end of the saw according to the constructive arrangement shown in figure 1;
Figure 3 shows a partially cut elevation view of the actuating pin of a Bosch ® type sawing device having the inventive saw coupled thereto;
Figure 3a shows an enlarged detailed view of the coupling sleeve of the actuating pin of a Bosch ® type sawing device having the inventive saw coupled thereto;
Figure 4 shows an elevation view of the actuating pin of a Black & Decker® type sawing device having the inventive saw coupled thereto;
Figure 4a shows another elevation view taken 90° to the previous figure showing in a partially cut view the coupling point of the actuating pin of a Black & Decker® type sawing device having the inventive saw coupled thereto;
Figure 4b shows an enlarged detailed view of the coupling sleeve of the actuating pin of the Bosch ® type sawing device having the inventive saw coupled thereto;
Figure 5 shows a partially cut elevation view of the actuating pin of a De Walt® type sawing device having the inventive saw coupled thereto;
Figure 5a shows an enlarged detailed view of the coupling sleeve of the actuating pin of a De Walt® type sawing device having the inventive saw coupled thereto;
Figure 6 shows an elevation view of the actuating pin of a B&D 3157 or DW 313 type sawing device having the inventive saw coupled thereto;
Figure 6a shows a top view of an enlarged cross-section of the coupling sleeve of the actuating pin of a sawing device taken from arrow "A" of the previous figure; and
Figure 6b shows a detailed partially cut front elevation view of the coupling sleeve of the actuating pin of a sawing device taken from arrow "A1" of figure 6.

According to these illustrations, the constructive arrangement in a saw object of the present invention comprises a thin laminar portion 10 having a compatible standardized length provided with a serrated working edge 1 that configures the cutting blade of the laminar saw 10 itself.

As can be seen in the figures, the free front end 2 of said laminar portion 10 is preferably beveled with rounded corners.

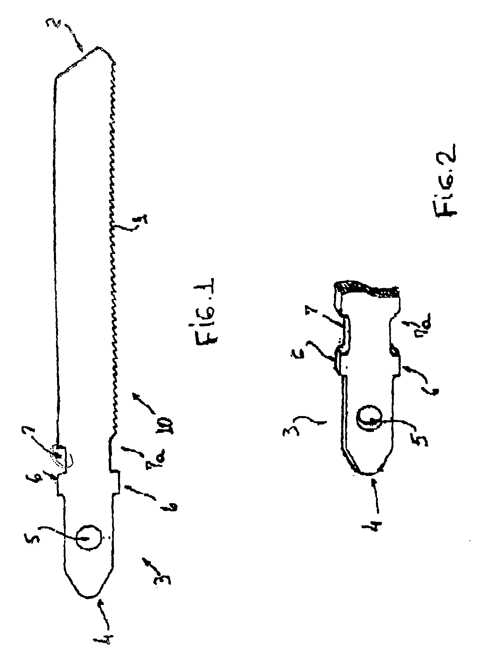

On the other hand, the back coupling end 3 of the portion 10 object of the present invention has a "V" shaped end edge 4 axially disposed along the body of blade 10. As can be seen in figures 1 and 2, more specifically in this back end of coupling 3, a circular through-hole 5 is provided that is centered and lined with the longitudinal axle of blade 10; said circular through-hole 5 being disposed equidistant said axial end "V" shaped edge and small rectangular transversal thin tabs 6 that are incorporated to the side edge of the back end 3 of the laminar portion 10.

Immediately after this pair of tabs 6, the side edges of the coupling end 3 of the portion 10 is provided with a recess 7 having a substantially rectangular contour on its upper side and a substantially trapezoidal contour on its lower side, see figure 1, thus configuring a neck that prevents the back universal end 3 from coupling with the rest of the body 1 and 2 of the sawing blade 10 itself.

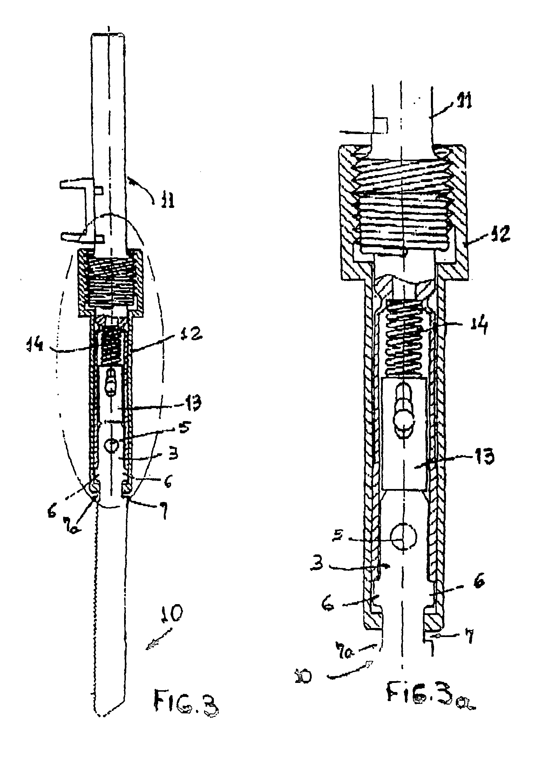

With this configuration of the coupling end 3, illustrated in figures 1 and 2, the sawing blade 10 can be connected to any type and model of sawing device as illustrated in figures 3, 4, 5, 6 and details thereof.

Figures the 3 and 3a show that the inventive sawing blade 10, when coupled to the actuating pin 11 of a Bosch® type device, has its back end 3 enclosed by the sleeve 12 of actuating pin, thus keeping its end edge 4 supported against a stopping pin 13 that, by means of a spring 14, urges the transversal tabs 6 of the universal end 3 against the inner face of the sleeve, thus holding firmly the sawing blade 10 to the actuating pin 11 of the machine. Thus, for this model of machine the elements that interact mechanically in the coupling thereof are: the end edge 4 and the transversal tabs 6 of the back end 3 of the blade 10.

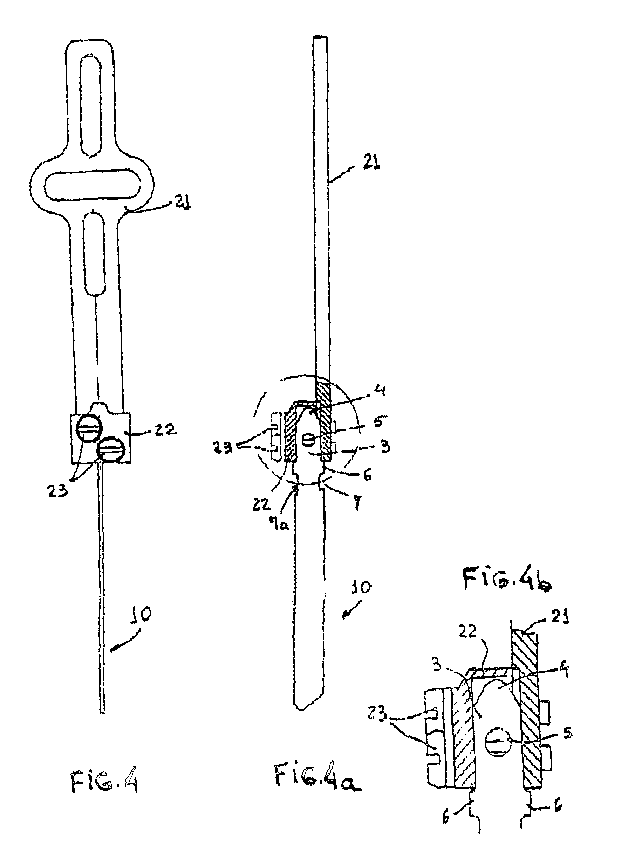

Figures 4 and 4a show that the inventive sawing blade 10, when coupled to the actuating pin 21 of a Black & Decker® type device, has its back end 3 held by the radial mechanical pressure exerted by the sleeve 22 and the locking bolts 23 that connect the actuating pin 21 and compress the front and back faces of the coupling end 3, see figures 4, 4a and 4b. Thus, the side edges of the coupling end 3 in front of the transversal tabs 6 of the universal end 3 remain compressed from above with the sleeve 22 and the actuating pin 21 while, simultaneously, the front and back faces of said end 3 are timely and alternatively compressed by the locking bolts 23. Thus, for this model of machine the elements that interact mechanically in the coupling is the peripheral contact of the universal end 3 portion between the end edge 4 and the side edges in front of the transversal tabs 6 of the back end 3 of the blade 10..

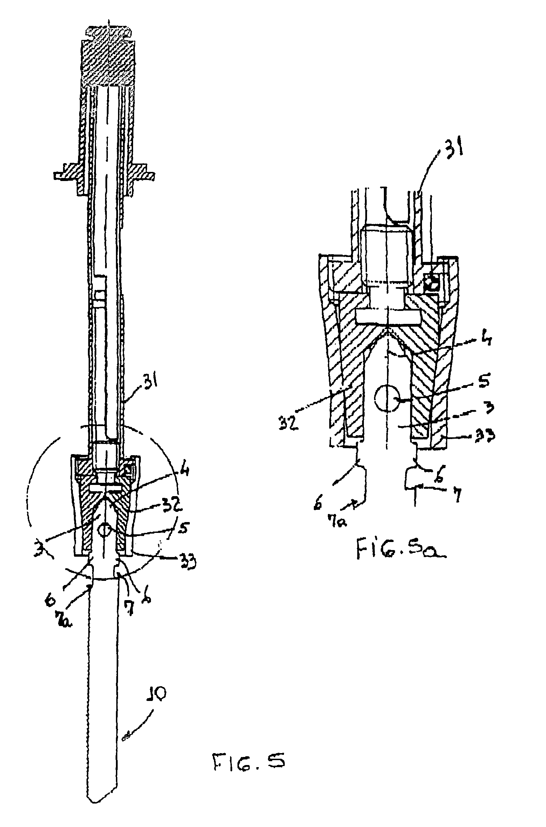

Figures 5 and 5a show that the present sawing blade 10, when coupled to the actuating pin 31 of a De Walt® type device, has its back end 3 held by the radial mechanical pressure on the conical bifid jaw 32 provided in inside the end of the sleeve 33. Thus, when axially and radially compressed by the jaw 32, the actuating pin 31 holds in its end the front and back faces and the side edges of the coupling end 3, provided in front of the transversal tabs 6 of the universal end 3. Thus, for this model of machine the elements that interact mechanically in the coupling also are the peripheral contact of the universal end 3 portion between the end edge 4 and the side edges in front of the transversal tabs 6 of the back end 3 of the blade 10.

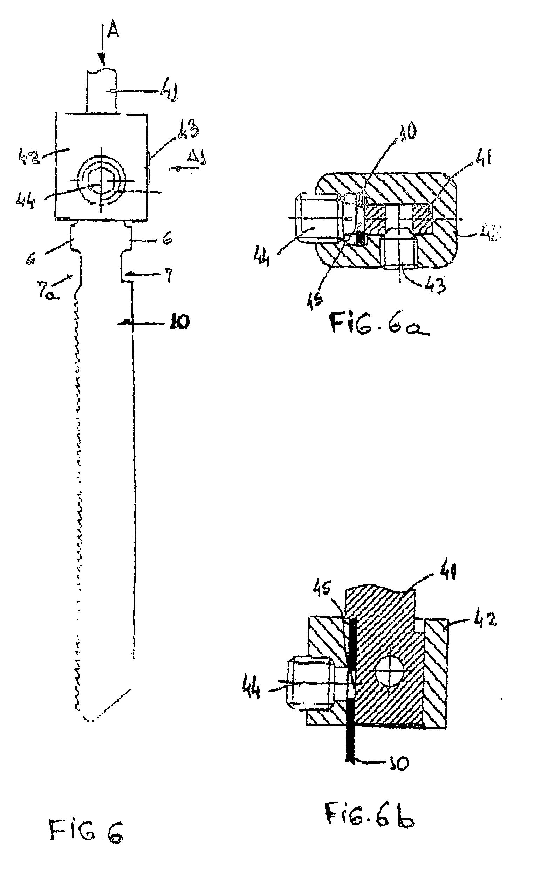

Finally, figures 6, 6a and 6b show that the inventive sawing blade 10, when coupled to the actuating pin 41 of a B&D 3157 or DW 313 type device, has its back end 3 enclosed by the sleeve 42 that is attached by a locking bolt 43 to the actuating pin 41. The coupling end 3 of the blade 10 is still held in the actuating pin 41 by a second locking bolt 44 that crosses the threads of the sleeve 42, the free end thereof axially incorporating a cylindrical portion 45 that is fit into the through-hole 5 of the coupling end 3 of the blade 10 attaching same to the end of the actuating pin 41. This way, for this model of machine the elements that interact mechanically in the coupling are the peripheral contact of the universal end 3 portion and the through-hole 5 of the blade 10.

Although a preferred constructive configuration has been described and illustrated, it should be pointed out that changes can be made and applied without departing from the scope of the present invention as defined by the appended claims.

## Claims

1. A saw blade for use with a plurality of sawing devices having a compatible standardised length and comprising a thin laminar cutting portion and a coupling end (3), said thin laminar portion having a serrated or indented profile being defined on its working edge that configures a cutting blade, wherein said coupling end (3) of the blade comprises a "V" shaped edge (4) centred on the blade's axis (10), small transversal thin tabs (6) incorporated on the side edges of said laminar portion (10), and a through-hole (5) that is centred and aligned with the longitudinal axis of said blade (10), **characterized in that** said through hole (5) is disposed equidistant from said "V" shaped axial edge (4) and said tabs (6) defining recesses (7, 7a) in the respective upper and lower side edges between said tab and said cutting portion, therefore configuring a neck that prevents the coupling end (3) from coupling with the cutting portion (1, 2) of said saw blade (10) itself.

2. A saw blade according to claim 1, **characterized in that** the through-hole (5) is circular.

3. A saw blade according to any preceding claim, **characterized in that** the transversal tabs (6) are rectangular.

4. A saw blade according to any preceding claim, **characterized in that** the recess (7) of the upper side has a substantially rectangular contour and the recess (7a) of the lower side has a substantially trapezoidal contour.

5. A saw blade according to any preceding claim, **characterized in that** the free front end of said laminar portion is defined by a bevelled shape with rounded corners.

## Patentansprüche

1. Ein Sägeblatt zur Verwendung mit einer Vielzahl von Sägevorrichtungen, das eine kompatible standardisierte Länge aufweist und einen dünnen lamellaren Schneideabschnitt und ein Kupplungsende (3) beinhaltet, wobei der dünne lamellare Abschnitt ein gezahntes oder gekerbtes Profil aufweist, das an seiner Arbeitskante, die ein Schneideblatt formt, definiert ist, wobei das Kupplungsende (3) des Blatts eine "V-förmige" Kante (4), die auf die Achse (10) des Blatts zentriert ist, kleine transversale dünne Nasen (6), die auf den Seitenkanten des lamellaren Abschnitts (10) inkorporiert sind, und ein Durchgangsloch (5), das zentriert und auf die longitudinale Achse des Blatts (10) ausgerichtet ist, beinhaltet, **dadurch gekennzeichnet, dass** das Durchgangsloch (5) äquidistant zu der "V-förmigen" axialen Kante (4) und den Nasen (6), welche an der oberen bzw. der unteren Seitenkante zwischen der Nase und dem Schneideabschnitt Aussparungen (7, 7a) definieren, wodurch ein Hals geformt wird, der das Kuppeln des Kupplungsendes (3) an den Schneideabschnitt (1, 2) des Sägeblatts (10) selbst verhindert, angeordnet ist.

2. Sägeblatt gemäß Anspruch 1, **dadurch gekennzeichnet, dass** das Durchgangsloch (5) kreisförmig ist.

3. Sägeblatt gemäß einem der vorhergehenden Ansprüche, **dadurch gekennzeichnet, dass** die transversalen Nasen (6) rechteckig sind.

4. Sägeblatt gemäß einem der vorhergehenden Ansprüche,
**dadurch gekennzeichnet, dass** die Aussparung (7) der oberen Seite eine im Wesentlichen rechteckige Kontur aufweist und die Aussparung (7a) der unteren Seite eine im Wesentlichen trapezförmige Kontur aufweist.

5. Sägeblatt gemäß einem der vorhergehenden Ansprüche, **dadurch gekennzeichnet, dass** das freie vordere Ende des lamellaren Abschnitts durch eine abgeschrägte Form mit abgerundeten Ecken definiert ist.

## Revendications

1. Une lame de scie destinée à être utilisée avec une pluralité de dispositifs de sciage ayant une longueur normalisée compatible et comprenant une portion de coupe laminaire mince et une extrémité de couplage (3), ladite portion laminaire mince ayant un profil cranté ou dentelé défini sur son bord de travail qui configure une lame de coupe, dans laquelle ladite extrémité de couplage (3) de la lame comprend un bord en forme de « V » (4) centré sur l'axe de la lame (10), de petites languettes transversales minces (6) incorporées sur les bords de côté de ladite portion laminaire (10), et un trou débouchant (5) qui est centré et aligné avec l'axe longitudinal de ladite lame (10), **caractérisée en ce que** ledit trou débouchant (5) est disposé à équidistance dudit bord axial en forme de « V » (4) et desdites languettes (6) définissant des renfoncements (7, 7a) dans les bords de côté supérieur et inférieur respectifs entre ladite languette et ladite portion de coupe, configurant dès lors un col qui empêche l'extrémité de couplage (3) de s'accoupler avec la portion de coupe (1, 2) de ladite lame de scie (10) elle-même.

2. Une lame de scie selon la revendication 1, **caractérisée en ce que** le trou débouchant (5) est circulaire.

3. Une lame de scie selon n'importe quelle revendication précédente, **caractérisée en ce que** les languettes transversales (6) sont rectangulaires.

4. Une lame de scie selon n'importe quelle revendication précédente, **caractérisée en ce que** le renfoncement (7) du côté supérieur a un contour substantiellement rectangulaire et le renfoncement (7a) du côté inférieur a un contour substantiellement trapézoïdal.

5. Une lame de scie selon n'importe quelle revendication précédente, **caractérisée en ce que** l'extrémité avant libre de ladite portion laminaire est définie par une forme biseautée avec des coins arrondis.
